(19) Europäisches Patentamt
European Patent Office
Office européen des brevets

(11) Veröffentlichungsnummer : **0 029 138**
**B1**

(12) # EUROPÄISCHE PATENTSCHRIFT

(45) Veröffentlichungstag der Patentschrift : **16.02.83**

(51) Int. Cl.$^3$ : **A 01 N 57/36**, C 07 F 9/65

(21) Anmeldenummer : **80106570.7**

(22) Anmeldetag : **25.10.80**

(54) **2-(Thi)Oxo-1,3,2-oxazaphospholane enthaltende Schädlingsbekämpfungsmittel und ihre Herstellung.**

(30) Priorität : **08.11.79 DE 2945036**

(43) Veröffentlichungstag der Anmeldung : **27.05.81 Patentblatt 81/21**

(45) Bekanntmachung des Hinweises auf die Patenterteilung : **16.02.83 Patentblatt 83/07**

(84) Benannte Vertragsstaaten : **BE CH DE FR GB IT LI NL**

(56) Entgegenhaltungen :
**DE A 2 810 923**
**CHEMICAL ABSTRACTS ; Band 91, Nr. 13, 24. September 1979, Seite 216, Zusammenfassung Nr. 103652x, Columbus, Ohio, US, ETO, MORIFUSA et al. : « Synthesis and insecticidal activity of 1,3,2-oxazaphospholidines »**
**CHEMICAL ABSTRACTS, Band 90, Nr. 11, 12. März 1979, Seite 163, Zusammenfassung Nr. 82066w, Columbus, Ohio, US, TAWATA, SHINKICHI et al. : « Oxazaphospholidines with pesticidal activity. II. Synthesis and insecticidal activities of five-membered cyclic phosphoramidates and phosphoramidothiolates »**

(73) Patentinhaber : **BAYER AG**
**Zentralbereich Patente, Marken und Lizenzen**
**D-5090 Leverkusen 1, Bayerwerk (DE)**

(72) Erfinder : **Hoffmann, Hellmut, Prof. Dr.**
**Tersteegenweg 17**
**D-5600 Wuppertal 1 (DE)**
Erfinder : **Krüger, Bernd-Wieland, Dr.**
**Sillerstrasse 49**
**D-5600 Wuppertal 11 (DE)**
Erfinder : **Behrenz, Wolfgang, Dr.**
**Untergründemich 14**
**D-5063 Overath (DE)**

**EP 0 029 138 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

2-(Thi)Oxo-1,3,2-oxazaphospholane enthaltende Schädlingsbekämpfungsmittel und ihre Herstellung

Die Erfindung betrifft neue insektizide und akarizide synergistische Wirkstoffkombinationen aus teilweise bekannten 2-(Thi)Oxo-1,3,2-oxazaphospholanen und anderen bekannten, insektiziden und akariziden Wirkstoffen.

Es ist bereits bekannt, daß folgende Wirkstoffe bzw. Wirkstoffgruppen pestizide, insbesondere insektizide und akarizide Eigenschaften besitzen :

A. Carbaminsäureester, wie z. B. N-Methyl-O-(2-iso-propoxyphenyl)-carbaminsäureester, N-Methyl-O-(2,3-dihydro-2,2-dimethyl-7-benzofuranyl)-carbaminsäureester, N-Methyl-O-(2,3-dimethyl-methylendioxy)-phenyl)-carbaminsäureester und N-Methyl-O-(1-methyl-thioethyliden-amino)-carbaminsäureester ;

B. Carbonsäureester, wie z. B. 2,2-Dimethyl-3-(2-methyl-propen-1-yl)-cyclopropancarbonsäure-(2,3,4,5-tetrahydro-phthalimido-methyl)-ester, 2,2-Dimethyl-3-(2,2-dibrom-vinyl)-cyclopropancarbonsäure-(α-cyano-3-phenoxy-benzyl)-ester, 2,2-Dimethyl-3-(2,2-dichlor-vinyl)-cyclopropancarbonsäure-(pentafluor-benzyl)- ester und Essigsäure-(2,2,2-trichlor-1-(3,4-dichlorphenyl)-ethyl)-ester sowie die natürlich vorkommenden Pyrethrine ;

C. Phosphorsäure- und Phosphonsäureester, wie z. B. O,O-Dimethyl-O-(2,2-dichlor-vinyl)-phosphorsäureester, und

D. Halogen(cyclo)alkane, wie z. B. Hexachlorcyclohexan.

Weiterhin sind synergistische Mischungen von Carbaminsäureestern, wie z. B. 2-Isopropoxy-phenyl-N-methylcarbamat oder von Phosphorsäureestern, z. B. O,O-Diethyl-O-(2-isopropyl-4-methyl-pyrimidin(6)yl)-thionophosphorsäureester oder von natürlichen oder synthetischen Pyrethroiden mit Piperonylethern, wie z. B. α-(2-(2-Butoxyethoxy)-ethoxy)-4,5-methylendioxy-2-propyl-toluol, bekannt (vergleiche Bull. Wld. Health Org. 1966, 35, Seiten 691-708 ; Schrader, G. : Die Entwicklung neuer insektizider Phosphorsäureester 1963, S. 158 ; Perkov, W. : Die Insektizide, 1966, Seiten 516-524). Doch ist die Wirksamkeit dieser synergistischen Wirkstoffkombinationen nicht befriedigend. Eine gewisse praktische Bedeutung hat bisher nur das α-(2-(2-Butoxy-ethoxy)-ethoxy)-4,5-methylen dioxy-2-propyl-toluol erlangt.

Es wurde nun gefunden, daß neue Schädlingsbekämpfungsmittel enthaltend eine Wirkstoffkombination aus (1) 2-(Thi)Oxo-1,3,2-oxazaphospholanen der Formel (I)

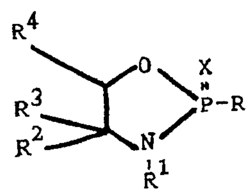

(I)

in welcher

X für Sauerstoff oder Schwefel steht,

R für gegebenenfalls substituierte Reste Alkyl, Phenyl, Alkoxy, Alkylthio, Aralkoxy, Amino, Alkylamino, Dialkylamino, N-Alkyl-N-aryl-amino, Phenoxy oder Phenylthio steht,

$R^1$ für Wasserstoff, gegebenenfalls halogen-substituiertes Alkyl oder Dialkylaminoalkyl steht,

$R^2$ für Wasserstoff, Alkyl, Alkylthioalkyl oder Aralkyl steht,

$R^3$ für Wasserstoff oder Alkyl steht und

$R^4$ für Wasserstoff oder Phenyl steht,

und (2)

A. Carbaminsäureestern oder

B. Carbonsäureestern einschließlich der natürlichen oder synthetischen Pyrethroide oder

C. Phosphorsäure- und Phosphonsäureestern oder

D. Halogen(cyclo)alkanen, eine besonders hohe pestizide, insbesondere insektizide und akarizide Wirkung aufweisen.

Das Verhältnis von (1) zu (2) beträgt vorzugsweise 0,1 : 10 bis 10 : 0,1.

Die Verbindungen der Formel (I) zeigen synergistische Wirkung insbesondere bei

A. Carbaminsäureestern der Formel (II)

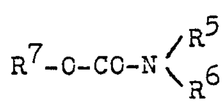

(II)

in welcher

$R^5$ für Wasserstoff oder $C_1$-$C_4$-Alkyl steht,

$R^6$ für $C_1$-$C_4$-Alkyl, für gegebenenfalls durch Halogen, Hydroxy oder Methylthio substituiertes $C_1$-

$C_4$-Alkyl-carbonyl oder für den Rest S-Z steht, wobei Z für gegebenenfalls halogen-substituiertes $C_1$-$C_4$-Alkyl oder für gegebenenfalls durch Halogen, Cyano, $C_1$-$C_4$-Alkyl, Trihalogenmethylthio, Trihalogenmethyl und/oder Nitro substituiertes Phenyl, oder für $C_1$-$C_4$-Alkoxy-carbonyl steht, und

$R^7$ für Aryl, für einen heterocyclischen Rest oder für einen Oximrest steht.

Als Wirkstoffkomponenten ganz besonders bevorzugt sind Carbaminsäureester der Formel (II), in welcher

$R^7$ für gegebenenfalls durch $C_1$-$C_4$-Alkyl, $C_1$-$C_4$-Alkoxy, $C_1$-$C_4$-Alkoxy-methyl, $C_1$-$C_4$-Alkylthio, $C_1$-$C_4$-Alkylthio-methyl, $C_1$-$C_4$-Alkylamino, Di-($C_1$-$C_4$-alkyl)-amino, Di-($C_2$-$C_4$-alkenyl)-amino und/oder Halogen substituierte Reste Phenyl, Naphthyl, 2,3-Dihydrobenzofuranyl, Methylendioxyphenyl, Dioxolanylphenyl, Pyrazolyl oder Pyrimidinyl steht, oder in welcher

$R^7$ für einen Alkylidenamino-rest der Formel (IIa)

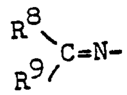

(IIa)

steht, in welcher

$R^8$ und $R^9$ gleich oder verschieden sind und einzeln für $C_1$-$C_5$-Alkyl, $C_3$-$C_8$-Cycloalkyl, $C_2$-$C_5$-Alkenyl, $C_2$-$C_5$-Alkinyl, $C_1$-$C_4$-Alkoxy, $C_1$-$C_4$-Alkylthio, $C_1$-$C_4$-Alkylthio-methyl, $C_1$-$C_4$-Alkoxycarbonyl, Carbamoyl, Cyano oder Phenyl, oder zusammen, gegebenenfalls durch $C_1$-$C_4$-Alkyl substituiertes $C_2$-$C_3$-Alkylendioxy oder $C_2$-$C_3$-Alkylendimercapto stehen.

Als Beispiele für die Carbaminsäureester der Formel (II) seien genannt :

2-Methyl-phenyl-, 2-Ethyl-phenyl-, 2-iso-Propyl-phenyl-, 2-sek.-Butyl-phenyl-, 2-Methoxy-phenyl-, 2-Ethoxy-phenyl-, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylamino-phenyl-, 2-Ethylthiomethyl-phenyl-, 1-Naphthyl-, 2,3-Dihydro-2,2-dimethyl-7-benzofuranyl-, 2,3-(Dimethyl-methylendioxy)-phenyl-, 2-(4,5-Dimethyl-1,3-dioxolan-2-yl)-phenyl-, 1-Methylthio-ethyliden-amino-, 2-Methylthio-2-methyl-propyliden-amino-, 1-(2-Cyano-ethylthio)-ethyliden-amino- und 1-Methylthiomethyl-2,2-dimethyl-propyliden-amino-N-methyl-carbaminsäureester.

Weiter zeigt sich die synergistische Wirkung der Verbindungen der Formel (I) vorzugsweise bei

B. Carbonsäureestern der Formel (III)

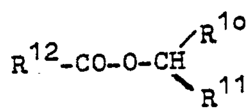

(III)

in welcher

$R^{12}$ für einen offenkettigen oder cyclischen Alkylrest steht, der gegebenenfalls substituiert ist durch Halogen, Alkyl, Cycloalkyl, durch gegebenenfalls durch Halogen und/oder Alkoxy substituiertes Alkenyl, durch Phenyl oder Styryl, welche gegebenenfalls durch Halogen, gegebenenfalls halogen-substituierte Reste Alkyl, Alkoxy, Alkylendioxy und/oder Alkylthio substituiert sind, durch spirocyclisch verknüpftes, gegebenenfalls halogen-substituiertes Cycloalk(en)yl, welches gegebenenfalls benzannelliert ist, in welcher weiter

$R^{10}$ für Wasserstoff, Alkyl, Halogenalkyl, Alkenyl, Alkinyl, oder Cyano steht, und

$R^{11}$ für einen gegebenenfalls substituierten Aryl-rest oder für einen Heterocyclus steht, oder zusammen mit $R^{10}$ und dem Kohlenstoffatom, an das beide Reste gebunden sind, einen Cyclopentenonring bildet.

Als Wirkstoffkomponenten ganz besonders bevorzugt sind Carbonsäureester der Formel (III), in welcher $R^{12}$ für den Rest

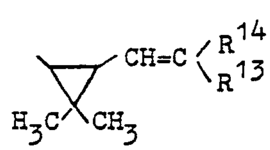

steht, worin

$R^{14}$ für Wasserstoff, Methyl, Fluor, Chlor oder Brom und

$R^{13}$ für Methyl, Fluor, Chlor, Brom, $C_1$-$C_2$-Fluoralkyl oder $C_1$-$C_2$-Chlorfluoralkyl oder für gegebenenfalls durch Halogen und/oder gegebenenfalls halogen-substituierte Reste $C_1$-$C_4$-Alkyl, $C_1$-$C_4$-Alkoxy, $C_1$-$C_4$-Alkylthio und/oder $C_1$-$C_2$-Alkylendioxy substituiertes Phenyl steht oder worin beide Reste $R^{13}$ und

$R^{14}$ für $C_2$-$C_5$-Alkandiyl (Alkylen) stehen ; oder in welcher

$R^{12}$ für den Rest

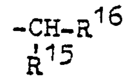

steht, worin

$R^{16}$ für gegebenenfalls durch Halogen und/oder durch gegebenenfalls halogen-substituierte Reste $C_1$-$C_4$-Alkyl, $C_1$-$C_4$-Alkoxy, $C_1$-$C_4$-Alkylthio oder $C_1$-$C_2$-Alkylendioxy substituiertes Phenyl steht und

$R^{15}$ für Isopropyl oder Cyclopropyl steht ; oder in welcher

$R^{12}$ für einen der Reste

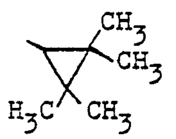

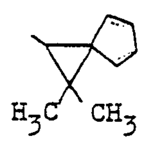

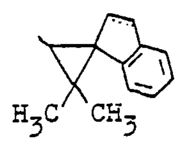

oder Methyl

steht ; in welcher weiter

$R^{10}$ für Wasserstoff, $C_1$-$C_4$-Alkyl, $C_1$-$C_4$-Halogenalkyl, Cyano oder Ethinyl steht und

$R^{11}$ für gegebenenfalls durch Halogen und/oder durch einen gegebenenfalls halogen-substituierten Rest $C_1$-$C_4$-Alkyl, $C_2$-$C_4$-Alkenyl, $C_1$-$C_4$-Alkoxy, $C_2$-$C_4$-Alkenoxy, $C_1$-$C_4$-Alkylthio, $C_1$-$C_2$-Alkylendioxy, Phenoxy und/oder Benzyl substituierte Reste Phenyl, Furyl oder Tetrahydrophthalimido steht.

Weiter sind die natürlich vorkommenden Pyrethroide besonders bevorzugt.

Als Beispiele für die Carbonsäureester der Formel (III) seien genannt :

Essigsäure-[2,2,2-trichlor-1-(3,4-dichlorphenyl)-ethyl]-ester, 2,3,4,5-Tetrahydrophthalimidomethylchrysanthemat, 3-Phenoxybenzyl-[2,2-dimethyl-3-(2,2-dichlorvinyl)-cyclopropan]-carboxylat, (5-Benzyl-furyl)-methyl-2,2-dimethyl-3-(2-methylpropenyl)-cyclopropancarboxylat, (∓)-as, trans-3-phenoxybenzyl-2, 2-dimethyl-3-(2-methyl-propenyl) cyclopropancarboxylat, 2,2-Dimethyl-3-dichorvinyl-as/trans-cyclopropancarbonsäure-α-cyano-3′-phenoxy-4′-fluorbenzylester, 5-benzyl-3-furylmethyl-d-cis(1R, 3S, E) 2,2-dimethyl-3-(2-oxo, 2,2,4,5-tetrahydrothiophenyliden-methyl) cyclopropancarboxylat, (R,S)-α-cyano-3-phenoxybenzyl(R, S)-2-(4-chlorphenyl)-3-methylbutyrat, (∓)-3-allyl-2-methyl-4-oxocyclopent-2-enyl-(+)-cis-trans-chrysanthemat, 2,2-Dimethyl-3-dichlorvinyl-cyclopropencarbonsäure-pentafluorbenzylester, [R, S]-α-cyano-3-phenoxybenzyl (1R, 1S)-cis, trans-3-(2,2-dichlorvinyl)-2,2-dimethyl-cyclopropancarboxylat, (S)-α-cyano-m-phenoxybenzyl (1R, 3R)-3-(2,2-dibromovinyl)-2,2-dimethyl-cyclopropancarboxylat.

Weiter zeigt sich die synergistische Wirkung der Verbindungen der Form I (I) vorzugsweise bei

C. Phosphorsäure- und Phosphonsäureestern der Formel (IV)

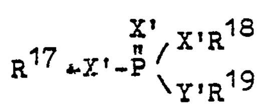

(IV)

in welcher

X′ für Sauerstoff oder Schwefel steht,

Y′ für Sauerstoff, Schwefel, Imino oder für eine direkte Bindung zwischen dem P-Atom und $R^{19}$ steht,

$R^{17}$ und $R^{18}$ gleich oder verschieden sind und für gegebenenfalls substituiertes Alkyl oder Aryl stehen und

$R^{19}$ für gegebenenfalls substituierte Reste Alkyl, Aryl, Heteroaryl, Aralkyl, Alkenyl, oder einen Oximrest oder für den gleichen Rest, an den es gebunden ist, steht.

Als Wirkstoffkomponenten besonders bevorzugt sind Phosphorsäure- und Phosphonsäureester der Formel (IV), in welcher

$R^{17}$ und $R^{18}$ gleich oder verschieden sind und für $C_1$-$C_4$-Alkyl oder Phenyl stehen und

$R^{19}$ für gegebenenfalls durch Halogen, Hydroxy und/oder Cyano substituiertes $C_1$-$C_4$-Alkyl, für gegebenenfalls durch Halogen, Cyano, Nitro, Carbamoyl, $C_1$-$C_4$-Alkyl-sulfonyl, $C_1$-$C_4$-Alkyl-sulfinyl, $C_1$-$C_4$-Alkyl-carbonyl, $C_1$-$C_4$-Alkyl, $C_1$-$C_4$-Alkoxy, $C_1$-$C_4$-Alkylthio und/oder $C_1$-$C_4$-Alkoxy-carbonyl substituiertes Phenyl, für gegebenenfalls durch Halogen und/oder halogen-substituiertes Phenyl, $C_1$-$C_4$-Alkoxy-carbonyl, $C_1$-$C_4$-Alkyl-amino-carbonyl oder Di-($C_1$-$C_4$-alkyl)-aminocarbonyl substituiertes $C_2$-$C_4$-Alkenyl oder für einen Oximrest der Formel (IIIa)

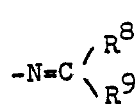

(IIa)

steht, worin $R^8$ und $R^9$ die oben angegebenen Bedeutungen haben, wobei jedoch insbesondere $R^8$ für Cyano und $R^9$ für $C_1$-$C_4$-Alkyl oder Phenyl steht ;

$R^{19}$ steht ferner insbesondere für gegebenenfalls durch Halogen, $C_1$-$C_4$-Alkyl, $C_1$-$C_4$-Alkoxy, $C_1$-$C_4$-Alkylthio, $C_1$-$C_4$-Alkyl-amino, Di-($C_1$-$C_4$-alkyl)-amino, $C_1$-$C_4$-Alkoxymethyl, $C_1$-$C_4$-Alkylthiomethyl, $C_1$-$C_4$-Alkyl-sulfinylmethyl und/oder $C_1$-$C_4$-Alkyl-sulfonylmethyl substituierte heteroaromatische Reste wie Pyridinyl, Chinolinyl, Chinoxalinyl, Pyrimidinyl, Benzo-oxotriazinyl, Pyrazolyl oder Imidazolyl.

Als Beispiele für die Phosphorsäureester der Formel (IV) sei O,O-Dimethyl-O-(2,2-dichlor-vinyl)-phosphorsäureester genannt.

Die synergistische Wirkung der Verbindungen der Formel (I) zeigt sich ferner vorzugsweise bei Halogen(cyclo)-alkanen, wie z. B. Hexachlorcyclohexan, 1,1,1-Trichlor-2,2-bis-(4-chlor-phenyl)-ethan, 1,1,1-Trichlor-2,2-bis-(4-methoxy-phenyl)-ethan und 1,1-Dichlor-2,2-bis-(4-ethyl-phenyl)-ethan.

Überraschenderweise ist die pestizide Wirksamkeit der erfindungsgemäßen Wirkstoffkombinationen wesentlich höher als die Wirkung der Einzelkomponenten bzw. die Summe der Wirkungen der Einzelkomponenten. Sie ist ferner wesentlich höher als die Wirkung von Wirkstoffkombinationen mit dem bekannten Synergisten Piperonylbutoxid.

Die für die erfindungsgemäßen Wirkstoffkombinationen zu verwendenden Synergisten sind durch Formel (I) definiert. Vorzugsweise stehen darin

X für Sauerstoff oder Schwefel,

R für gegebenenfalls halogen-substituiertes $C_1$-$C_4$-Alkyl, Phenyl, $C_1$-$C_5$-Alkoxy, $C_1$-$C_4$-Alkylthio, Amino, $C_1$-$C_4$-Alkyl-amino, Di-($C_1$-$C_4$-alkyl)-amino, N-Phenyl-N-($C_1$-$C_4$-alkyl)-amino, Benzyloxy, Phenethoxy, Phenylthio oder für gegebenenfalls durch Halogen, Cyano, Nitro, Carbamoyl, $C_1$-$C_4$-Alkylsulfonyl, $C_1$-$C_4$-Alkyl-sulfinyl, $C_1$-$C_4$-Alkyl-carbonyl, $C_1$-$C_4$-Alkyl, $C_1$-$C_4$-Alkoxy, $C_1$-$C_4$-Alkylthio und/oder $C_1$-$C_4$-Alkoxycarbonyl substituiertes Phenoxy,

$R^1$ für Wasserstoff, $C_1$-$C_4$-Alkyl oder 2-Di-($C_1$-$C_4$-alkyl)-amino-ethyl,

$R^2$ für Wasserstoff, $C_1$-$C_4$-Alkyl, 2-($C_1$-$C_4$-Alkyl-thio)-ethyl oder Benzyl,

$R^3$ für Wasserstoff oder $C_1$-$C_3$-Alkyl und

$R^4$ für Wasserstoff oder Phenyl.

Verbindungen der Formel (I) sind bekannt und können nach literaturbekannten Verfahren hergestellt werden (vergleiche z. B. DE-OS 2 810 923 ; Bull. Chem. Soc. Japan *39* (1966), 1296-1297 ; Bull. Soc. Chim. France *1970*, 4341-4347 ; J. Chem. Soc. Perkin I *1977*, 1969 ; J. Org. Chem. *31* (1966), 2903-2907).

Man erhält Verbindungen der Formel (I), in welcher R für gegebenenfalls substituierte Reste Alkyl, Phenyl, Alkoxy, Alkylthio, Amino, Alkylamino, Dialkylamino, N-Alkyl-N-aryl-amino, Phenoxy oder Phenylthio steht, wenn man 2-(Thi)Oxo-2-halogen-1,3,2-oxazaphospholane der Formel (V)

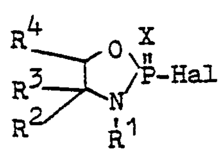 (V)

in welcher

X, $R^1$, $R^2$, $R^3$ und $R^4$ die oben angegebenen Bedeutungen haben und

Hal für Halogen, insbesondere für Chlor, steht, mit Verbindungen der Formel (VI)

$$H—R \quad (VI)$$

in welcher

R obige Bedeutungen hat, gegebenenfalls in Gegenwart eines Säureakzeptors, wie z. B. Natriumethylat oder Triethylamin, und gegebenenfalls unter Verwendung eines Verdünnungsmittels, wie z. B. Ethanol oder Toluol, bei Temperaturen zwischen 10 und 80 °C umsetzt. Die Aufarbeitung erfolgt nach üblichen Methoden, beispielsweise durch Extraktion der Produkte mit Toluol aus der mit Wasser verdünnten Reaktionsmischung, Waschen der organischen Phase mit Wasser, Trocknen und Destillation.

Verbindungen der Formel (I) in welcher

R die oben angegebene Bedeutung hat, erhält man auch, wenn man (Thio)Phosphonsäuredichloride der Formel (VII)

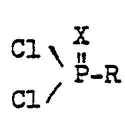 (VII)

in welcher

X für Sauerstoff oder Schwefel steht und

R die oben angegebene Bedeutung hat, mit Aminoalkoholen der Formel (VIII)

$$R^1NH-\overset{\displaystyle R^2}{\underset{\displaystyle R^3}{C}}-\underset{\displaystyle R^4}{CH}-OH \qquad \text{(VIII)}$$

in welcher

$R^1$, $R^2$, $R^3$ und $R^4$ die oben angegebenen Bedeutungen haben, gegebenenfalls in Gegenwart eines Säureakzeptors, wie z. B. Triethylamin, und gegebenenfalls unter Verwendung eines Verdünnungsmittels, wie z. B. Toluol, bei Temperaturen zwischen 10 und 80 °C umsetzt und wie oben beschrieben aufarbeitet.

Die Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören :

Aus der Ordnung der Isopoda z. B. Oniscus asellus, Armadillidium vulgare, Porcellio scaber.

Aus der Ordnung der Diplopoda z. B. Blaniulus guttulatus.

Aus der Ordnung der Chilopoda z. B. Geophilus carpophagus, Scutigera spec.

Aus der Ordnung der Symphyla z. B. Scutigerella immaculata.

Aus der Ordnung der Thysanura z. B. Lepisma saccharina.

Aus der Ordnung der Collembola z. B. Onychiurus armatus.

Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z. B. Forficula auricularia.

Aus der Ordnung der Isoptera z. B. Reticulitermes spp.

Aus der Ordnung der Anoplura z. B. Phylloxera vastatrix, Pemphigus spp., Pediculus humanus corporis, Haematopinus spp., Linognathus spp.

Aus der Ordung der Mallophaga z. B. Trichodectes spp., Damalinea spp.

Aus der Ordnung der Thysanoptera z. B. Hercinothrips femoralis, Thrips tabaci.

Aus der Ordnung der Heteroptera z. B. Eurygaster spp., Dysdercus intermedius, Piesma quadrata, Cimex lectularius, Rhodnius prolixus, Triatoma spp.

Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z. B. Pectinophora gossypiella, Bupalus piniarius, Chematobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotassa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp.

Aus der Ordnung der Arachnida z. B. Scorpio maurus, Latrodectus mactans.

Aus der Ordnung der Acarina z. B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,000 000 1 bis zu 100 Gew.-% Wirkstoff, vorzugsweise zwischen 0,000 1 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser ; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid ; als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel kommen in Frage : z. B. nichtionogene und anionische Emulgatoren, wie Polyoxyäthylen-Fettsäure-Ester, Polyoxyäthylen-Fettalkohol-Äther, z. B. Alkylarylpolyglykol-äther, Alkylsulfonate, Alkylsulfate, Arylsulfonate sowie Eiweißhydrolysate ; als Dispergiermittel kommen in Frage : z. B. Lignin-Sulfit-ablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

## Herstellungsbeispiele

### Beispiel 1

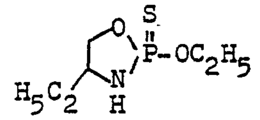

Zu einer gut gerührten Lösung von 36 g O-Ethylphosphorsäureesterdichlorid in 300 ml Methylenchlorid läßt man bei 20-25 °C eine Lösung von 18 g 2-Aminobutanol-1 und 40 g Triethylamin in 100 ml Methylenchlorid innerhalb von 2-3 Stunden zutropfen. Man rührt über Nacht nach, wäscht mit Wasser, trocknet über Natriumsulfat, zieht das Lösungsmittel im Vakuum ab und destilliert den verbleibenden Rückstand. Ausbeute 26 g (66,7 % der Theorie) ; Siedepunkt 88 °C/0,01 mbar) 2-Thioxo-2-ethoxy-4-ethyl-1,3,2-oxazaphospholan.

Beispiel 2

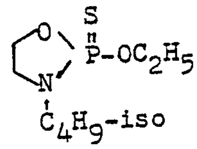

22 g 2-Thioxo-2-chlor-3-iso-butyl-1,3,2-oxazaphospholan werden in 150 ml Toluol vorgelegt und bei einer Innentemperatur zwischen 20 und 30 °C mit einer Lösung von 0,1 Mol Natriumethylat in Ethanol tropfenweise versetzt. Das Reaktionsgemisch wird 3 Stunden gerührt, mit Wasser gewaschen, getrocknet, filtriert und destilliert. Ausbeute : 17 g (76 % der Theorie) ; Siedepunkt : 75 °C/0,01 mbar ; 2-Thioxo-2-ethoxy-3-iso-butyl-1,3,2-oxazaphospholan.

Analog einem der Beispiele 1 und/oder 2 können folgende Verbindungen der allgemeinen Formel I hergestellt werden

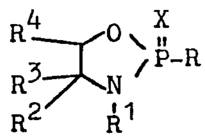

(I)

(Siehe die Tabellen, Seiten 9 bis 16)

| Beispiel Nr. | R | $R^1$ | $R^2$ | $R^3$ | $R^4$ | X | Ausbeute (% der Theorie) | Physikal. Daten (Brechungsindex; Siedepunkt °C bei 1,33 $P_a$ = 0,01 Torr) |
|---|---|---|---|---|---|---|---|---|
| 3 | $-OCH_3$ | H | H | $-C_3H_7$-iso | H | S | 67 | |
| 4 | $-OC_2H_5$ | H | H | $-CH_2-CH(CH_3)_2$ | H | S | 65 | $n_D^{25}$:1,5o99 |
| 5 | $-CH_3$ | $-CH_2-CH(CH_3)_2$ | H | H | H | S | 76 | 78 |
| 6 | 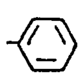 | $-CH_2-CH(CH_3)_2$ | H | H | H | S | 68 | 124 |
| 7 | $-OCH_3$ | H | H | $-CH_2-CH(CH_3)_2$ | H | S | 51 | $n_D^{25}$:1,5o21 |
| 8 | $-OCH_3$ | H | $-CH_2-$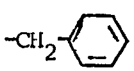 | H | H | S | 49 | |
| 9 | $-N(CH_3)_2$ | $-CH_2-CH(CH_3)_2$ | H | H | H | S | 81 | 76 |
| 1o | $-NH-C_3H_7$-iso | $-CH_2-CH(CH_3)_2$ | H | H | H | S | 68 | 1o4 |

(Fortsetzung)

| Beispiel Nr. | R | $R^1$ | $R^2$ | $R^3$ | $R^4$ | X | Ausbeute (% der Theorie) | Physikal. Daten (Brechungsindex; Siedepunkt °C bei 1,33 $P_a$ = 0,01 Torr) |
|---|---|---|---|---|---|---|---|---|
| 11 | 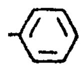 | H | H | $-C_2H_5$ | H | S | 30 | 68-69 |
| 12 | $-OC_2H_5$ | $-CH_2-CH(CH_3)_2$ | H | H | H | O | 65 | 78-80 |
| 13 | $-N(CH_3)_2$ | $-CH_2-CH(CH_3)_2$ | H | H | H | O | 68 | 85 |
| 14 | $-OCH_3$ | $-CH_2-CH(CH_3)_2$ | H | H | H | S | 81 | 70 |
| 15 | $-OCH_3$ | H | H | $-C_2H_5$ | H | S | 56 | 80 |
| 16 | $-CH_3$ | $-CH_2-CH_2-N(C_2H_5)_2$ | H | H | H | S | 59 | 95 |
| 17 | $-CH_3$ | $-C_3H_7$-iso | H | H | H | S | 67 | 72 |
| 18 | $-OC_3H_7$-n | $-CH_2-CH(CH_3)_2$ | H | H | H | S | 76 | 76 |
| 19 | $-OC_3H_7$-iso | $-CH_2-CH(CH_3)_2$ | H | H | H | S | 76 | 77 |

(Fortsetzung)

| Bei-spiel Nr. | R | $R^1$ | $R^2$ | $R^3$ | $R^4$ | X | Ausbeute (% der Theorie) | Physikal. Daten (Brechungsindex; Schmelzpunkt °C/; Siedepunkt bei 1,33 $P_a$ = 0,01 Torr) |
|---|---|---|---|---|---|---|---|---|
| 2o | $-CH_3$ | $-C_2H_5$ | H | H | H | S | 55 | 62 |
| 21 | $-CH_3$ | H | H | $-C_2H_5$ | H | S | 64 | 85 |
| 22 | $-NH_2$ | $-C_3H_7$-iso | H | H | H | S | 78 | 66-67 |
| 23 | $-OC_2H_5$ | $-CH_2-CH_2-N(C_2H_5)_2$ | H | H | H | S | 38 | 112 |
| 24 | $-OCH_3$ | $-C_3H_7$-iso | H | H | H | S | 82 | 62 |
| 25 | $-OC_3H_7$-iso | H | H | $-C_2H_5$ | H | S | 43 | 91 |
| 26 | $-OC_2H_5$ | $-C_3H_7$-iso | H | H | H | S | 78 | 7o |
| 27 | -S- 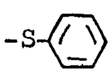 | H | H | $-C_2H_5$ | H | S | 69 | |
| 28 | $-SC_3H_7$-n | $-CH_2-CH_2-N(C_2H_5)_2$ | H | H | H | S | 71 | |
| 29 | $-SC_3H_7$-n | H | H | $-C_2H_5$ | H | S | 8o | $n_D^{19}$:1,5573 |

(Fortsetzung)

| Beispiel Nr. | R | $R^1$ | $R^2$ | $R^3$ | $R^4$ | X | Ausbeute (% der Theorie) | Physikal. Daten (Brechungsindex; Siedepunkt °C bei 1,33$P_a$ = 0,01 Torr) |
|---|---|---|---|---|---|---|---|---|
| 3o | $-SC_3H_7$-n | $-C_2H_5$ | H | H | H | S | 73 | $n_D^{19}$:1,5528 |
| 31 | $-N(CH_3)_2$ | H | H | $-C_2H_5$ | H | S | 8o | $n_D^{22}$:1,5o86 |
| 32 | $-OC_2H_5$ | $-C_2H_5$ | H | H | H | S | 87 | $n_D^{21}$:1,5o28 |
| 33 | $-OC_2H_5$ | $-C_2H_5$ | H | H | H | O | 65 | 76 |
| 34 | $-OC_2H_5$ | $-C_3H_7$-iso | H | H | H | O | 71 | 79 |
| 35 | $-N(CH_3)_2$ | $-C_3H_7$-iso | H | H | H | S | 79 | 9o |
| 36 | $-OC_2H_5$ | H | H | $-C_2H_5$ | H | O | 83 | $n_D^{2o}$:1,461o |
| 37 | $-OC_2H_5$ | $-CH_2-CH_2-N(C_2H_5)_2$ | H | H | H | O | 55 | $n_D^{2o}$:1,4679 |
| 38 | -O-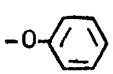 | $-CH_2-CH_2-N(C_2H_5)_2$ | H | H | H | O | 7o | $n_D^{2o}$:1,521o |

(Fortsetzung)

| Beispiel Nr. | R | $R^1$ | $R^2$ | $R^3$ | $R^4$ | X | Ausbeute (% der Theorie) | Physikal. Daten (Brechungsindex; Siedepunkt °C bei 1,22 Pa = 0,01 Torr) |
|---|---|---|---|---|---|---|---|---|
| 39 | -O-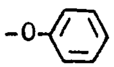 | H | H | $-C_2H_5$ | H | O | 68 | $n_D^{2o}$:1,525o |
| 4o | $-OCH_3$ | $-C_2H_5$ | H | H | H | S | 74 | 63 |
| 41 | $-NH-C_3H_7$-iso | $-C_2H_5$ | H | H | H | S | 77 | 88-92 |
| 42 | -O-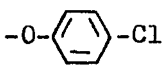-Cl | $-C_2H_5$ | H | H | H | S | 68 | 12o |
| 43 | $-CH_3$ | H | $-CH_3$ | $-CH_3$ | H | S | 7o | $n_D^{22}$:1,5317 |
| 44 | $-OC_2H_5$ | H | H | $-(CH_2-CH(CH_3)_2$ | H | S | 78 | 92 |
| 45 | $-OC_2H_5$ | H | $-CH_3$ | $-CH_3$ | H | S | 44 | $n_D^{22}$:1,5o62 |
| 46 | $-OC_2H_5$ | H | $-CH_3$ | $-CH_3$ | H | O | 73 | $n_D^{22}$:1,4544 |
| 47 | $-OC_2H_5$ | H | $-CH_2-CH_2-SCH_3$ | H | H | S | 69 | $n_D^{22}$:1,5411 |
| 48 | $-CH_3$ | H | $-CH_2-CH_2-SCH_3$ | H | H | S | 76 | $n_D^{22}$:1,5718 |

(Fortsetzung)

| Beispiel Nr. | R | $R^1$ | $R^2$ | $R^3$ | $R^4$ | X | Ausbeute (% der Theorie) | Physikal. Daten (Brechungsindex; Siedepunkt °C) |
|---|---|---|---|---|---|---|---|---|
| 49 | $-OC_2H_5$ | $-CH_3$ | H | H | 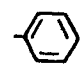 | S | 84 | $n_D^{19}$:1,5557 |
| 5o | $-OC_2H_5$ | $-CH_3$ | H | $-C_3H_7$-iso | H | S | 45 | 74/ 1,33 $P_a$ = 0,02 Torr |
| 51 | $-CH_3$ | $-CH_3$ | H | H | 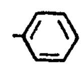 | S | 82 | $n_D^{25}$:1,581o |
| 52 | $-OC_3H_7$-n | $-CH_3$ | H | H | H | S | | 148/200 $P_a$ = 1,5 Torr |
| 53 | $-OC_3H_7$-iso | $-CH_3$ | H | H | H | S | | 131/200 $P_a$ = 1,5 Torr |
| 54 | $-OC_2H_5$ | H | H | H | H | S | | $n_D^{2o}$:1,522o |
| 55 | 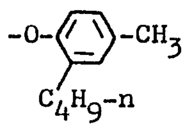 | $-CH_3$ | H | H | H | S | | $n_D^{23}$:1,5476 |
| 56 | 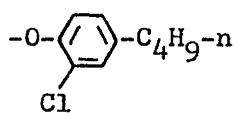 | $-CH_3$ | H | H | H | S | | $n_D^{23}$:1,56o2 |

(Fortsetzung)

| Beispiel Nr. | R | $R^1$ | $R^2$ | $R^3$ | $R^4$ | X | Ausbeute (% der Theorie) | Physikal. Daten (Brechungsindex) |
|---|---|---|---|---|---|---|---|---|
| 57 | 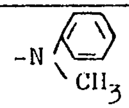 | $-CH_3$ | H | H | H | S | | $n_D^{23}$:1,5918 |
| 58 | $-OCH_2-CH_2CH(CH_3)_2$ | $-CH_3$ | H | H | H | S | | $n_D^{23}$:1,5314 |
| 59 | -O- 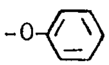 | $-CH_3$ | H | H | H | S | | $n_D^{23}$:1,5891 |
| 6o | -S- 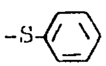 | $-CH_3$ | H | H | H | S | | $n_D^{23}$:1,6354 |
| 61 | $-CH_3$ | $-CH_3$ | H | H | H | S | | $n_D^{22}$:1,553o |
| 62 | 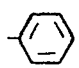 | $-CH_3$ | H | H | H | S | | $n_D^{2o}$:1,6133 |
| 63 | $-C_2H_5$ | $-CH_3$ | H | $-CH_3$ | 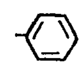 | S | | $n_D^{2o}$:1,5451 |
| 64 | $-OC_3H_7$-n | $-CH_3$ | H | $-CH_3$ | 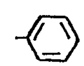 | S | | $n_D^{2o}$:1,552o |
| 65 | $-OC_2H_5$ | $-CH_3$ | H | $-CH_3$ | 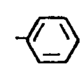 | S | | $n_D^{2o}$:1,5495 |
| 66 | $-CH_3$ | $-CH_3$ | H | $-CH_3$ | 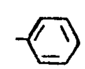 | S | | $n_D^{2o}$:1,5613 |

(Fortsetzung)

| Beispiel Nr. | R | $R^1$ | $R^2$ | $R^3$ | $R^4$ | X | Ausbeute (% der Theorie) | Physikal. Daten (Brechungsindex) |
|---|---|---|---|---|---|---|---|---|
| 57 | $-SCH_3$ | $-CH_3$ | H | $-CH_3$ | 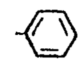 | O | | $n_D^{2o}$:1,5723 |
| 58 | 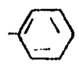 | $-CH_3$ | H | $-CH_3$ | 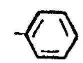 | S | | $n_D^{2o}$:1,5652 |
| 59 | $-CH_3$ | H | H | H | H | S | | $n_D$ :1,58o |
| 7o | $-OC_2H_5$ | $-CH_3$ | H | H | H | S | | $n_D$ :1,5o4o |
| 71 | $-SCH_3$ | $-CH_3$ | H | H | H | O | | $n_D$ :1,5288 |
| 72 | $-C_2H_5$ | H | H | H | H | S | | $n_D$ :1,5526 |
| 73 | $-SCH_3$ | H | H | H | H | O | | $n_D$ :1,5475 |
| 74 | 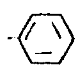 | H | H | H | H | S | | $n_D$ :1,6olo |
| 75 | $-O-CH_2-CH_2-$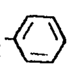 | $-CH_3$ | H | H | H | S | | $n_D^{23}$:1,5795 |

Beispiel

$LT_{100}$-Test

Testtiere : Musca domestica, Stamm Weymanns (gegen Carbamate und Phosphorsäureester resistent)

Lösungsmittel : Aceton

Von den Wirkstoffen, Synergisten und Gemischen aus Wirkstoffen und Synergisten werden Lösungen hergestellt und 2,5 ml davon in Petrischalen auf Filterpapierscheiben von 9,5 cm Durchmesser pipetiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Testtiere wird bis zu 6 Stunden laufendkontrolliert. Es wird diejenige Zeit ermittelt, die für eine 100 %ige knock-down-Wirkung erforderlich ist, Wird die $LT_{100}$ nach 6 Stunden nicht erreicht, wird der %-Satz der knockdown gegangenen Testtiere festgestellt.

Konzentrationen der Wirkstoffe, Synergisten und Gemische und ihre Wirkungen gehen aus der nachfolgenden Tabelle hervor.

(Siehe die Tabellen, Seiten 18 bis 27)

Tabelle
LT 100 — Test mit dem multiresistenten
Musca domestica-Stamm Weymanns

| Wirkstoff ( ) Kennbuchstabe | bzw. Synergist ( ) Beispiel Nr. | Konzentration in % | LT 100 nach Minuten |
|---|---|---|---|
| 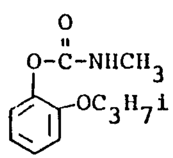 (A') | | 1,0 | 360' = 0 % |
| 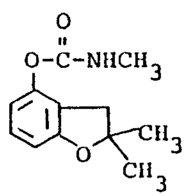 (B') | | 1,0 | 360' = 0 % |

Tabelle (Fortsetzung)
LT 100 — Test mit dem multiresistenten
Musca domestica-Stamm Weymanns

| Wirkstoff () Kennbuchstabe | bzw. Synergist () Beispiel Nr. | Konzentration in % | LT 100 nach Minuten |
|---|---|---|---|
| 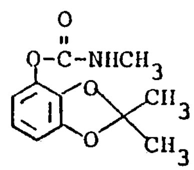 (C') | | 1,0 | 360' = 0 % |
| 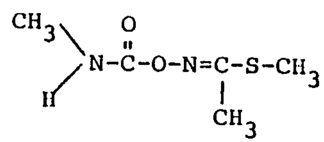 (D') | | 0,2 | 360' = 0 % |
| 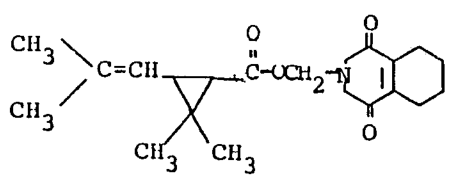 (E') | | 0,2 | 360' = 0 % |

Tabelle (Fortsetzung)
LT 100— Test mit multiresistenten
Musca domestica-Stamm Weymanns

| Wirkstoff<br>() Kennbuchstabe | bzw. Synergist<br>() Beispiel Nr. | Konzentration in % | LT 100 nach Minuten |
|---|---|---|---|
| Pyrethrine als 25 %iger Extrakt | | 0,2 | 105' |
| 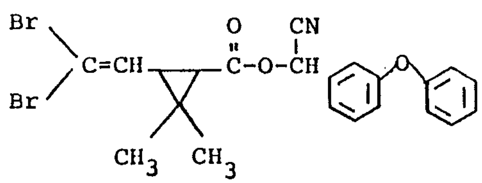<br>(G') | | 0,008 | 75' |
| 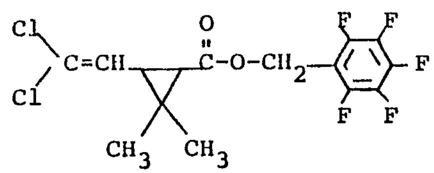<br>(H') | | 0,0016 | 45' |

Tabelle (Fortsetzung)
LT 100 — Test mit dem multiresistenten
Musca domestica-Stamm Weymanns

| Wirkstoff () Kennbuchstabe | bzw. Synergist () Beispiel Nr. | Konzentration in % | LT 100 nach Minuten |
|---|---|---|---|
| 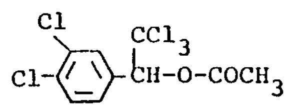 (J') | | 1,0 | 360' = 40 % |
| 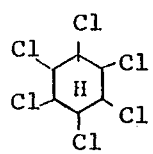 (K') | | 0,04 | 360' = 95 % |
| $CCl_2=CH-O-\overset{O}{\overset{\Vert}{P}}-(OCH_3)_2$ (L') | | 0,008 | 360' = 70 % |

| Wirkstoffe bzw. Kennbuchstabe | Synergisten ()Beispiel Nr. | Konzentrationen in % | LT 100 nach Minuten |
|---|---|---|---|
| | 9 | 1,0 | 360' = 70 % |
| | 2 | 1,0 | 360' = 65 % |
| | 19 | 1,0 | 360' = 5 % |
| | 22 | 1,0 | 360' = 0 % |
| | 1 | 1,0 | 150' |
| | 25 | 1,0 | 360' = 50 % |
| | 26 | 1,0 | 360' = 85 % |
| | 24 | 1,0 | 360' = 90 % |
| | 29 | 1,0 | 360' = 0 % |
| | 30 | 1,0 | 360' = 0 % |
| | 31 | 0,2 | 360' = 70 % |
| | 32 | 0,2 | 360' = 0 % |
| | 35 | 1,0 | 360' = 60 % |
| | 16 | 1,0 | 360' = 0 % |
| | 17 | 0,2 | 360' = 70 % |
| | 20 | 1,0 | 360' = 20 % |
| | 21 | 1,0 | 360' = 5 % |
| | 40 | 0,2 | 360' = 0 % |
| | 41 | 0,2 | 360' = 0 % |
| | 43 | 1,0 | 360' = 30 % |
| | 44 | 0,2 | 360' |
| | 46 | 1,0 | 360' = 65 % |
| | 55 | 1,0 | 360' = 70 % |
| | 52 | 1,0 | 360' = 15 % |
| | 53 | 1,0 | 360' = 25 % |

| Wirkstoffe bzw. Kennbuchstabe | | Synergisten () Beispiel Nr. | Konzentrationen in % | LT 100 nach Minuten |
|---|---|---|---|---|
| A' | + | Piperonylbutoxid | 0,2 + 0,2 | 360' = 90 % |
| A' | + | 9 | 0,04 + 0,04 | 180' |
| A' | + | 2 | 0,04 + 0,04 | 150' |
| A' | + | 19 | 0,04 + 0,04 | 180' |
| A' | + | 22 | 0,04 + 0,04 | 180' |
| A' | + | 1 | 0,04 + 0,04 | 75' |
| A' | + | 25 | 0,04 + 0,04 | 105' |
| A' | + | 26 | 0,04 + 0,04 | 150' |
| A' | + | 24 | 0,2 + 0,2 | 75' |
| A' | + | 27 | 0,2 + 0,2 | 360' |
| A' | + | 30 | 0,2 + 0,2 | 240' |
| A' | + | 31 | 0,2 + 0,2 | 120' |
| A' | + | 32 | 0,2 + 0,2 | 150' |
| A' | + | 35 | 0,04 + 0,04 | 180' |
| A' | + | 16 | 0,2 + 0,2 | 240' |
| A' | + | 17 | 0,04 + 0,04 | 90' |
| A' | + | 20 | 0,04 + 0,04 | 150' |
| A' | + | 21 | 0,2 + 0,2 | 150' |
| A' | + | 40 | 0,04 + 0,04 | 150' |
| A' | + | 41 | 0,2 + 0,2 | 150' |
| A' | + | 43 | 0,04 + 0,04 | 240' |
| A' | + | 44 | 0,04 + 0,04 | 120' |
| A' | + | 46 | 0,04 + 0,04 | 105' |
| A' | + | 55 | 0,2 + 0,2 | 240' |
| A' | + | 52 | 0,2 + 0,2 | 210' |
| A' | + | 53 | 0,2 + 0,2 | 360' |

| Wirkstoffe bzw. Kennbuchstabe | Synergisten () Beispiel Nr. | Konzentrationen in % | LT 100 nach Minuten |
|---|---|---|---|
| B'+ | Piperonylbutoxid | 0,04 + 0,04 | 180' |
| B'+ | 9 | 0,04 + 0,04 | 105' |
| B'+ | 46 | 0,04 + 0,04 | 120' |
| B'+ | 17 | 0,04 + 0,04 | 90' |
| B'+ | 2 | 0,04 + 0,04 | 120' |
| B'+ | 1 | 0,04 + 0,04 | 90' |
| B'+ | 25 | 0,04 + 0,04 | 120' |
| B'+ | 31 | 0,04 + 0,04 | 150' |
| B'+ | 32 | 0,04 + 0,04 | 105' |
| B'+ | 35 | 0,04 + 0,04 | 105' |
| B'+ | 40 | 0,04 + 0,04 | 105' |
| B'+ | 44 | 0,04 + 0,04 | 90' |
| C'+ | Piperonylbutoxid | 0,2 + 0,2 | 360' = 85 % |
| C'+ | 9 | 0,04 + 0,04 | 180' |
| C'+ | 46 | 0,04 + 0,04 | 150' |
| C'+ | 17 | 0,04 + 0,04 | 120' |
| C'+ | 2 | 0,2 + 0,2 | 150' |
| C'+ | 20 | 0,2 + 0,2 | 105' |
| C'+ | 1 | 0,04 + 0,04 | 150' |
| C'+ | 25 | 0,04 + 0,04 | 210' |
| C'+ | 26 | 0,2 + 0,2 | 150' |
| C'+ | 31 | 0,2 + 0,2 | 180' |
| C'+ | 32 | 0,2 + 0,2 | 150' |
| C'+ | 35 | 0,04 + 0,04 | 210' |
| C'+ | 40 | 0,04 + 0,04 | 180' |
| C'+ | 44 | 0,04 + 0,04 | 210' |

| Wirkstoffe bzw. Kenn-buchstabe | Synergisten () Beispiel Nr. | Konzentrationen in % | LT 100 nach Minuten |
|---|---|---|---|
| D'+ | Piperonyl-butoxid | 0,2 + 0,2 | 240' |
| D'+ | 9 | 0,04 + 0,04 | 180' |
| D'+ | 46 | 0,04 + 0,04 | 150' |
| D'+ | 17 | 0,04 + 0,04 | 105' |
| D'+ | 2 | 0,04 + 0,04 | 150' |
| D'+ | 20 | 0,2 + 0,2 | 105' |
| D'+ | 1 | 0,04 + 0,04 | 150' |
| D'+ | 25 | 0,04 + 0,04 | 150' |
| D'+ | 26 | 0,04 + 0,04 | 150' |
| D'+ | 31 | 0,04 + 0,04 | 210' |
| D'+ | 32 | 0,2 + 0,2 | 90' |
| D'+ | 35 | 0,04 + 0,04 | 180' |
| D'+ | 40 | 0,2 + 0,2 | 60' |
| D'+ | 44 | 0,2 + 0,2 | 75' |
| E'+ | Piperonyl-butoxid | 0,2 + 0,2 | 45' |
| E'+ | 1 | 0,2 + 0,2 | 30' |
| F'+ | Piperonyl-butoxid | 0,2 + 0,2 | 60' |
| F'+ | 9 | 0,2 + 0,2 | 45' |
| F'+ | 46 | 0,2 + 0,2 | 45' |
| F'+ | 17 | 0,2 + 0,2 | 30' |
| F'+ | 1 | 0,2 + 0,2 | 45' |
| F'+ | 32 | 0,2 + 0,2 | 45' |
| F'+ | 35 | 0,2 + 0,2 | 30' |
| F'+ | 40 | 0,2 + 0,2 | 30' |
| F'+ | 44 | 0,2 + 0,2 | 45' |

| Wirkstoffe bzw. Kennbuchstabe | Synergisten () Beispiel Nr. | Konzentrationen in % | | LT 100 nach Minuten |
|---|---|---|---|---|
| G' + | Piperonylbutoxid | 0,008 | + 0,008 | 75' |
| G' + | 9 | 0,008 | + 0,008 | 60' |
| G' + | 1 | 0,008 | + 0,008 | 60' |
| G' + | 26 | 0,008 | + 0,008 | 60' |
| G' + | 32 | 0,008 | + 0,008 | 60' |
| G' + | 40 | 0,008 | + 0,008 | 60' |
| G' + | 44 | 0,008 | + 0,008 | 60' |
| H' + | Piperonylbutoxid | 0,0016 | + 0,0016 | 45' |
| H' + | | 0,0016 | + 0,0016 | 30' |
| J' + | Piperonylbutoxid | 1,0 | + 1,0 | 360' = 75% |
| J' + | 9 | 0,04 | + 0,04 | 360' |
| J' + | 22 | 0,04 | + 0,04 | 360' = 95% |
| J' + | 1 | 0,04 | + 0,04 | 180' |
| J' + | 25 | 0,04 | + 0,04 | 360' |
| J' + | 26 | 0,04 | + 0,04 | 360' |
| J' + | 24 | 0,04 | + 0,04 | 360' |
| J' + | 29 | 1,0 | + 1,0 | 240' |
| J' + | 31 | 0,04 | + 0,04 | 360' |
| J' + | 32 | 1,0 | + 1,0 | 180' |
| J' + | 35 | 0,04 | + 0,04 | 240' |
| J' + | 17 | 0,04 | + 0,04 | 180' |
| J' + | 20 | 1,0 | + 1,0 | 90' |
| J' + | 40 | 0,04 | + 0,04 | 210' |
| J' + | 41 | 0,04 | + 0,04 | 360' |
| J' + | 43 | 1,0 | + 1,0 | 105' |
| J' + | 44 | 0,04 | + 0,04 | 180' |
| J' + | 46 | 0,04 | + 0,04 | 360' |

| Wirkstoffe bzw. Kenn-buchstabe | Synergisten () Beispiel Nr. | Konzentra-tionen in % | LT 100 nach Minuten |
|---|---|---|---|
| K' + | Piperonyl-butoxid | 0,04 + 0,04 | 360' |
| K' + | 46 | 0,008 + 0,008 | 180' |
| K' + | 17 | 0,008 + 0,008 | 180' |
| K' + | 2 | 0,04 + 0,04 | 210' |
| K' + | 20 | 0,008 + 0,008 | 180' |
| K' + | 1 | 0,008 + 0,008 | 210' |
| K' + | 25 | 0,04 + 0,04 | 180' |
| K' + | 26 | 0,04 + 0,04 | 210' |
| K' + | 32 | 0,04 + 0,04 | 210' |
| K' + | 40 | 0,04 + 0,04 | 120' |
| K' + | 44 | 0,008 + 0,008 | 210' |
| L' + | Piperonyl-butoxid | 0,008 + 0,008 | 360' |
| L' + | 46 | 0,008 + 0,008 | 150' |
| L' + | 17 | 0,008 + 0,008 | 105' |
| L' + | 2 | 0,008 + 0,008 | 150' |
| L' + | 1 | 0,008 + 0,008 | 150' |
| L' + | 25 | 0,008 + 0,008 | 150' |
| L' + | 26 | 0,008 + 0,008 | 150' |
| L' + | 35 | 0,008 + 0,008 | 180' |
| L' + | 40 | 0,008 + 0,008 | 180' |
| L' + | 44 | 0,008 + 0,008 | 120' |

**Ansprüche**

1. Schädlingsbekämpfungsmittel enthaltend eine Wirkstoffkombination aus (1) 2-(Thi) Oxo-1,3,2-Oxazaphospholanen der Formel I

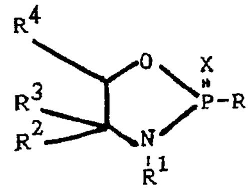

(I)

in welcher

X für Sauerstoff oder Schwefel steht,

R für gegebenenfalls substituierte Reste Alkyl, Phenyl, Alkoxy, Alkylthio, Aralkoxy, Amino, Alkylamino, Dialkylamino, N-Alkyl-N-aryl-amino, Phenoxy oder Phenylthio steht,

$R^1$ für Wasserstoff, gegebenenfalls halogensubstituiertes Alkyl oder Dialkylaminoalkyl steht,

$R^2$ für Wasserstoff, Alkyl, Alkylthioalkyl oder Aralkyl steht,

$R^3$ für Wasserstoff oder Alkyl steht und

$R^4$ für Wasserstoff oder Phenyl steht,

und (2)

A. Carbaminsäureestern oder

B. Carbonsäureestern einschließlich der natürlichen oder synthetischen Pyrethroide oder

C. Phosphorsäure- und Phosphonsäureestern oder

D. Halogen (cyclo) alkanen.

2. Schädlingsbekämpfungsmittel nach Anspruch 1, dadurch gekennzeichnet, daß in der Wirkstoffkombination das Gewichtsverhältnis von (1) zu (2) 0,1 : 10 bis 10 : 0,1 beträgt.

3. Verfahren zur Bekämpfung von Schädlingen, dadurch gekennzeichnet, daß man eine Wirkstoffkombination gemäß Anspruch 1 auf die Schädlinge oder ihren Lebensraum einwirken läßt.

4. Verwendung von Wirkstoffkombinationen gemäß Anspruch 1 zur Bekämpfung von Schädlingen.

5. Verfahren zur Herstellung von Schädlingsbekämpfungsmitteln, dadurch gekennzeichnet, daß man eine Wirkstoffkombination gemäß Anspruch 1 mit Streckmitteln und/oder oberflächenaktiven Mitteln vermischt.

**Claims**

1. Pest-combating agents containing an active compound combination of (1) 2-(thi) oxo-1,3,2-Oxazaphospholanes of the formula I

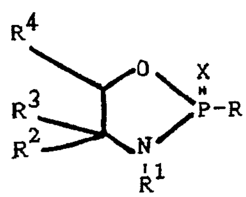

(I)

in which

X represents oxygen or sulphur,

R represents an optionally substituted alkyl, phenyl, alkoxy, alkylthio, aralkoxy, amino, alkylamino, dialkylamino, N-alkyl-N-aryl-amino, phenoxy or phenylthio radical,

$R^1$ represents hydrogen, optionally halogensubstituted alkyl or dialkylaminoalkyl,

$R^2$ represents hydrogen, alkyl, alkylthioalkyl or aralkyl,

$R^3$ represents hydrogen or alkyl and

$R^4$ represents hydrogen or phenyl,

and (2)

A. carbamic acid esters or

B. carboxylic acid esters, including the naturally occurring or synthetic pyrethroids, or

C. phosphoric acid esters and phosphonic acid esters or

D. halogeno (cyclo) alkanes.

2. Pest-combating agents according to Claim 1, characterised in that the weight ratio of (1) to (2) in the active compound combination is 0.1 : 10 to 10 : 0.1.

3. Process for combating pests, characterised in that an active compound combination according to

Claim 1 is allowed to act on the pests or their environment.

4. Use of active compound combinations according to Claim 1 for combating pests.

5. Process for the preparation of pest-combating agents, characterised in that an active compound combination according to Claim 1 is mixed with extenders and/or surface-active agents.

**Revendications**

1. Agents parasiticides contenant une combinaison de substances actives constituées de (1) 2-(thi) oxo-1,3,2-oxazaphospholanes de formule I

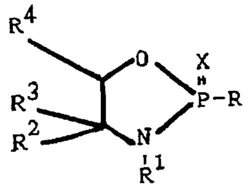

dans laquelle

X représente un atome d'oxygène ou de soufre,

R représente un groupe alkyle, phényle, alcoxy, alkylthio, aralcoxy, amino, alkylamino, dialkylamino, N-alkyl-N-aryl-amino, phénoxy ou phénylthio éventuellement substitué,

$R^1$ représente un atome d'hydrogène, un groupe dialkylaminoalkyle ou alkyle éventuellement substitué par un atome d'halogène,

$R^2$ représente un atome d'hydrogène, un groupe alkyle, un groupe alkylthioalkyle ou un groupe aralkyle,

$R^3$ représente un atome d'hydrogène ou un groupe alkyle, et

$R^4$ représente un atome d'hydrogène ou un groupe phényle,

et (2)

A. des esters d'acide carbamique ou

B. des esters d'acides carboxyliques, y compris des pyréthroïdes naturels ou synthétiques, ou

C. des esters d'acide phosphorique et d'acide phosphonique ou

D. des halogéno (cyclo) alcanes.

2. Agents parasiticides suivant la revendication 1, caractérisés en ce que, dans la combinaison de substances actives, le rapport pondéral entre (1) et (2) est de 0,1 : 10 à 10 : 0,1.

3. Procédé en vue de combattre les parasites, caractérisé en ce qu'on fait agir une combinaison de substances actives suivant la revendication 1 sur les parasites ou leur biotope.

4. Utilisation de combinaisons de substances actives suivant la revendication 1 pour combattre les parasites.

5. Procédé de préparation d'agents parasiticides, caractérisé en ce qu'on mélange une combinaison de substances actives suivant la revendication 1 avec des diluants et/ou des agents tensio-actifs.